# FASCICULE DE BREVET EUROPEEN

(11) **EP 3 783 313 B1**
(45) Date de publication et mention de la délivrance du brevet: **07.10.2026**
(21) Numéro de dépôt: 20192033.7
(22) Date de dépôt: 20.08.2020
(51) Int. Cl.: G01C 21/20

(54) **DISPOSITIF DE CRÉATION ET DE GESTION D'ITINÉRAIRES**
VORRICHTUNG ZUR ERSTELLUNG UND VERWALTUNG VON REISEROUTEN
DEVICE FOR CREATING AND MANAGING ITINERARIES

(30) Priorité: 23.08.2019 FR 1909382
(43) Date de publication de la demande: 24.02.2021
(73) Titulaire: BULL SAS, 78340 Les Clayes-sous-Bois (FR)
(72) Inventeur: FOURNIER, Christophe, 31150 Fenouillet (FR); LESPINASSE, Hubert, 31170 Tournefeuille (FR); AILLERES, Christophe, 31450 Labastide Beauvoir (FR)
(74) Mandataire: Novagraaf Technologies

(56) Documents cités:
- WO-A1-2016/185696
- WO-A1-2018/048913
- US-A1- 2009 157 312
- US-A1- 2018 174 061
- US-A1- 2018 274 927
- US-A1- 2018 276 351

## Description

### DOMAINE TECHNIQUE DE L'INVENTION

**La** présente invention concerne de manière générale le domaine des dispositifs de gestion d'itinéraires, notamment pour des patrouilles.

### ETAT DE LA TECHNIQUE ANTERIEURE

Le déroulement d'une journée ordinaire pour un individu d'une opération de sécurité ou prévoyance est planifié manuellement et au jour le jour en tenant compte de la vie de la cité et de renseignements pris parmi les événements de l'actualité de la ville, par exemple une manifestation programmée ou une rencontre sportive. A chaque information reçue, correspond une action des forces de sécurité et prévoyance en réponse à cette information. Les itinéraires sont donc fournis aux patrouilles chaque matin pour la journée, notamment à l'aide d'une carte sur lequel est superposé un itinéraire.

Il est connu de l'art antérieur l'optimisation d'un itinéraire à l'aide d'un dispositif GPS tel que par exemple le dispositif GPS « grand public » qui superpose l'itinéraire sur une carte et transmet l'information au conducteur d'une voiture. Il existe aussi des systèmes pour envoyer les mêmes itinéraires à une flotte de poids lourds formant un groupe, afin de leur donner le même itinéraire.

Par exemple, la demande US20170323249 décrit un système permettant de séquencer dynamiquement et de façon optimale les itinéraires de circulation d'un véhicule en fonction des conditions historiques et en temps réel du trafic, et de prévoir les conditions de circulation prévues le long de l'itinéraire généré dynamiquement. L'enchaînement des itinéraires est basé sur un ensemble de contraintes prédéfinies, par exemple la distance, le temps, le temps en fonction du trafic, ou toute autre fonction de coût objective. Ce système peut être mis en œuvre dans un parc de véhicules comprenant un ou plusieurs véhicules avec un ou plusieurs dépôts, ou sans dépôts. Un serveur d'optimisation obtient des données en temps réel, selon l'historique du trafic et/ou selon le trafic prévu, la météo, les dangers et les zones d'évitement sur des zones d'évitement sur des segments de route pour générer un itinéraire, tout en respectant les paramètres et les contraintes définis par un processus automatique d'apprentissage automatique (Machine Learning en anglais), un programme d'intelligence artificielle ou un administrateur humain. La plate-forme peut être couplée à des capteurs placés sur les routes, par exemple un radar ou une caméra, et à des capteurs placés dans les véhicules, par exemple un système GPS ou un capteur de diagnostic embarqué.

En outre, certains de ces dispositifs GPS intègrent des points d'intérêts, dans leur données, le conducteur pouvant ainsi paramétrer son dispositif GPS pour demander au logiciel de calcul d'un itinéraire de prendre ces points d'intérêt comme des points à intégrer à l'itinéraire à calculer.

Le document WO2018/048913A1 concerne un système et une méthode d'identification dynamique de risques, d'acheminement de ressources, de surveillance et de formation de personnes. Le document US2018/276351A1 concerne un système et une méthode de planification et de modification d'itinéraires pour véhicules autonomes ou téléopérés, reposant sur la détection en temps réel d'événements via des signaux externes.

Cependant, il manque aujourd'hui un dispositif permettant la planification d'actions pour des hommes affectés aux opérations de sécurité ou prévoyance, en temps réel, avec de multiples contraintes et points d'intérêts, à partir de données diverses.

### EXPOSE DE L'INVENTION

La présente invention a donc pour objet de proposer un dispositif de création et de gestion d'itinéraires, pour des patrouilles ou des personnes affectés aux opérations de sécurité ou prévoyance, permettant de palier au moins une partie des inconvénients de l'art antérieur.

Ce but est atteint par un dispositif de gestion d'itinéraires d'un groupe de personnes selon la revendication 1.
- Un module de communication de données en temps réel, apte à émettre et recevoir des données d'au moins un autre module de communication, les données comprenant par exemple des informations concernant des évènements planifiés ou non planifiés,
- Au moins une base de données comprenant des données géographiques vectorielles et/ou géoréférencées, et des données non géoréférencées,
- un module de calcul d'un itinéraire à effectuer, le module de calcul calculant ledit itinéraire en fonction des informations transmises par le module de réception, le module de calcul d'un itinéraire implémentant au moins un algorithme d'intelligence artificielleprésentant une architecture d'apprentissage automatique configuré pour calculer l'itinéraire optimal, selon des critères de décision paramétrables et mémorisés, à partir de données conservées dans une base de données,
   ledit algorithme d'intelligence artificielle se basant sur des données, préférentiellement classées, de la base de données, telles que des données publiques et privées enregistrées comprenant des itinéraires, des évènements, et des situations passés, et/ou des données météos, actualités présentes et passées.

Selon une particularité, la base de données comprend des données comprenant des informations concernant la topographie environnant au moins un terminal utilisé par un membre du groupe et/ou le groupe, ou encore des informations sur le groupe.

Selon une particularité, le module de calcul comprend un sous-module de détection d'évènements implémentant configuré pour pouvoir accéder, par le réseau internet, aux différents réseaux, notamment sociaux, ou autres sources d'informations publiques ou privées pour détecter des événements planifiés et non planifiés, collecter des données des évènements détectés, et les enregistrer dans la base de données du dispositif, par exemple par extraction et analyse de données publiques ou privées telles que celles provenant des réseaux sociaux, ou des messages.

Selon une particularité, ledit module de calcul est configuré pour classifier automatiquement lesdits évènements détectés selon des critères définis en rapport avec une mission du groupe de personnes.

Selon une autre particularité, les critères de décision paramétrables permettent d'ajouter des contraintes pour le calcul de l'itinéraire, par exemple des préférences, des points de passage ou de contrôles, ou ordres complémentaires provenant d'un niveau hiérarchique par exemple des interdictions.

Selon une autre particularité, les données reçues et émises par le dispositif sont chiffrées, le dispositif comprenant en outre un module de chiffrement et déchiffrement configuré pour déchiffrer les données reçues et pour chiffrer les données émises.

Selon une autre particularité, le module de calcul fournit l'itinéraire sous la forme d'un ordre graphique, ou d'une carte comportant des points colorés reliés entre eux et indiquant sur le graphique ou la carte au moyen de symboles des lieux en particulier ou des événements.

Selon une autre particularité, le module de calcul est configuré pour envoyer et commander l'affichage de différents types d'informations et d'ordres de mission.

Selon une autre particularité, les données utilisées par le module de calcul sont extraites de bases de données privées les contenant et choisies parmi des données privées telles que le trajet de patrouilles par le passé pour déterminer la durée de la patrouille en fonction du périmètre à couvrir, les événements passés relevés et enregistrés dans le système de communication, les sites sensibles mémorisés et situés dans le périmètre de la patrouille, la pertinence des patrouilleurs en fonction des données de la base de données du personnel, le nombre de kilomètres déjà parcourus par le personnel du groupe fourni par le terminal d'au moins un membre du groupe, la topographie du terrain fournie par des bases de données géographiques vectorielles, et des données publiques telles que la météo ou par exemple l'actualité des événements planifiés ou imprévus, ces données étant récupérées par une interface reliée au réseau internet, ou des bases de données spécifiques.

Selon une autre particularité, ledit sous-module de détection est configuré pour réaliser des analyses textuelles et/ou contextuelles pour détecter des événements planifiés et/ou non planifiés.

Selon une autre particularité, le dispositif de gestion d'itinéraires d'un groupe de personnes fait partie d'un système de gestion d'itinéraire comprenant en outre un terminal de communication, de préférence mobile et porté par au moins un utilisateur faisant partie dudit groupe de personnes, le terminal de communication comprenant :
- un module de communication de données en temps réel, apte à émettre et recevoir des données d'au moins un autre module de communication, les données comprenant par exemple des informations concernant des évènements planifiés ou non planifiés
- une application d'interface Homme Machine (IHM) comprenant un module d'affichage graphique de l'itinéraire calculé par le module de calcul, configuré pour afficher sur ledit terminal de communication ledit itinéraire et/ou des informations reçues du dispositif,
- Au moins une base de données comprenant des cartes ou données géographiques vectorielles, géoréférencées ou non géoréférencées, les données comprenant, par exemple, des informations concernant des évènements, la topographie environnant au moins un terminal utilisé par un membre du groupe et/ou le groupe, et des données sur le groupe ;

Selon une autre particularité, l'application du terminal comprend en outre un module d'entrée manuelle de données ou d'évènement, par exemple d'évènement non planifié, par l'utilisateur du terminal, le terminal de communication étant de préférence configuré pour envoyer lesdites données ou évènement au dispositif de gestion d'itinéraires.

Selon une autre particularité, le terminal comprend en outre un module de calcul de position dudit terminal, configuré pour calculer en temps réel la position d'un utilisateur du dispositif par l'intermédiaire de son terminal et, par exemple, le situer sur son trajet, voire, orienter une carte par rapport à la position, l'orientation et/ou le déplacement de l'utilisateur.

Selon une autre particularité, le module de calcul de position dudit terminal est configuré pour envoyer ladite position du terminal au dispositif de gestion d'itinéraires, par l'envoi de données par l'intermédiaire du module de communication du terminal.

**Selon** une autre particularité, le module d'affichage graphique fournit l'itinéraire sous la forme d'un ordre graphique, ou d'une carte comportant des points colorés ou des symboles, par exemple reliés entre eux, et indiquant sur le graphique ou la carte, des lieux en particulier ou des événements.

Selon une autre particularité, le module d'affichage graphique est configuré pour afficher différents types d'informations et d'ordres de mission.

Selon une autre particularité, chaque module de communication comprend un module de chiffrement configuré pour chiffrer les données à envoyer par l'intermédiaire du module de communication et pour déchiffrer des données chiffrées reçues par le module de communication.

Selon une autre particularité, le système comprenant en outre un serveur de communication sécurisé configuré pour être une passerelle relais entre le dispositif de gestion d'itinéraires, et une pluralité de terminaux de communication, le serveur comportant un module de communication, configuré pour envoyer des données de l'itinéraire calculé à une pluralité de modules de communication d'une pluralité de terminaux, et un module de chiffrement et déchiffrement configuré pour chiffrer les données à envoyer au dispositif et au terminal et pour déchiffrer des données chiffrées reçues du dispositif et du terminal.

### BREVE DESCRIPTION DES FIGURES

D'autres caractéristiques, détails et avantages de l'invention ressortiront à la lecture de la description qui suit en référence aux figures annexées, qui illustre :
- [Fig. 1] représente de façon schématique le système selon certains modes de réalisation,
- [Fig. 2] représente des exemples d'affichages de l'application selon certains modes de réalisation.

### DESCRIPTION DETAILLEE DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

De manière générale, la présente invention comporte un dispositif de gestion d'itinéraires d'un groupe de personnes selon la revendication 1.

Avantageusement, le calcul des itinéraires par le module de calcul est préférentiellement centralisé dans un dispositif de gestion car il est très lourd pour être supporté et opéré par chaque terminal de communication portatif de manière décentralisé. Le serveur effectue les calculs des trajets à partir des informations reçues, puis les envoie à des destinataires, de préférence au moins un terminal de communication.

Un des buts du dispositif est de fusionner un grand nombre de données entre elles (géographiques, contextuelles, graphiques) pour définir le meilleur graphe de parcours possible.

Par « drone » on entend tout véhicule aérien non habité comprenant un ordinateur porté par le véhicule aérien non habité pour contrôler le vol du véhicule aérien non habité, le drone pouvant communiquer avec un serveur de communication distant.. Par le terme « au moins un algorithme d'intelligence artificielle », on entend ici soit des réseaux de neurones artificiel (généralement entrainés sur lesdites données classées), soit des outils statistiques utilisant lesdites données (par exemple pour trouver des « puits statistiques » pertinents).

La base de données comprend des données géographiques vectorielles et/ou géoréférencées, et des données non géoréférencés, les données comprenant des informations concernant des évènements, la topographie environnant au moins un terminal utilisé par un membre du groupe et/ou le groupe, ou encore des informations sur le groupe.

On comprend que le dispositif peut comprend une unique base de données ou plusieurs bases de données. Dans les cas où il comprend plusieurs bases de données, il peut comprendre une base de données de personnel et/ou d'utilisateurs du système.

Dans certains modes de réalisation, le module de calcul comprend un sous-module de détection d'évènements configuré pour pouvoir accéder, par le réseau internet, aux différents réseaux, notamment sociaux, ou autres sources d'informations publiques ou privées pour détecter des événements planifiés et non planifiés, collecter des données des évènements détectés, et les enregistrer dans la base de données du dispositif, par exemple par extraction et analyse de données publiques ou privées telles que celles provenant des réseaux sociaux, ou des messages.

Dans certains modes de réalisation, ledit algorithme d'intelligence artificielle est configuré pour classifier automatiquement lesdits évènements détectés selon des critères définis en rapport avec une mission du groupe de personnes.

Dans certains modes de réalisation, les critères de décision paramétrables permettent d'ajouter des contraintes pour le calcul de l'itinéraire, par exemple des préférences, des points de passage ou de contrôles, des informations provenant d'une base de données concernant le personnel et notamment l'état de chaque membre du personnel constituant ou pouvant constituer le groupe, ou ordres complémentaires provenant d'un niveau hiérarchique par exemple des interdictions.

L'état de chaque membre du personnel peut par exemple être un état parmi fatigué, pertinent, débutant ou tout autre état représentant un facteur de décision pour le choix des personnes à intégrer sur un itinéraire donné.

Dans certains modes de réalisation, les données reçues et émises par le dispositif sont chiffrées, le dispositif comprenant en outre un module de chiffrement et déchiffrement configuré pour déchiffrer les données reçues et pour chiffrer les données émises.

Dans certains modes de réalisation, le module de calcul fournit l'itinéraire sous la forme d'un ordre graphique, ou d'une carte comportant des points colorés reliés entre eux et indiquant sur le graphique ou la carte au moyen de symboles des lieux en particulier ou des événements.

Dans certains modes de réalisation, le module de calcul est configuré pour envoyer et commander l'affichage de différents types d'informations et d'ordres de mission.

Dans certains modes de réalisation, les données utilisées par le module de calcul sont extraites de bases de données privées les contenant et choisies parmi des données privées telles que le passage de patrouilles par le passé pour déterminer la durée de la patrouille en fonction du périmètre à couvrir, les événements passés relevés et enregistrés dans le système de communication, les sites sensibles mémorisés et situés dans le périmètre de la patrouille, la pertinence des patrouilleurs en fonction des données de la base de données du personnel, le nombre de kilomètres déjà parcourus par le personnel du groupe fourni par le terminal d'au moins un membre du groupe, la topographie du terrain fournie par des bases de données géographiques vectorielles, et des données publiques telles que la météo ou par exemple l'actualité des événements planifiés ou imprévus, ces données étant récupérées par une interface reliée au réseau internet, ou des bases de données spécifiques.

Dans certains modes de réalisation, ledit sous-module de détection est configuré pour réaliser des analyses textuelles et/ou contextuelles pour détecter des événements planifiés et/ou non planifiés.

Dans certains modes de réalisation, le dispositif de gestion d'itinéraires d'un groupe de personnes fait partie d'un système de gestion d'itinéraire comprenant en outre un terminal de communication, de préférence mobile et porté par au moins un utilisateur faisant partie dudit groupe de personnes, le terminal de communication comprenant :
- un module de communication de données en temps réel, apte à émettre et recevoir des données d'au moins un autre module de communication, les données comprenant par exemple des informations concernant des évènements planifiés ou non planifiés
- une application d'interface Homme Machine (IHM) comprenant un module d'affichage graphique de l'itinéraire calculé par le module de calcul, configuré pour afficher sur ledit terminal de communication ledit itinéraire et/ou des informations reçues du dispositif,
- Au moins une base de données comprenant des données géographiques vectorielles et/ou géoréférencées, et des données non géoréférencées, les données comprenant, par exemple, des informations concernant des évènements, la topographie environnant au moins un terminal utilisé par un membre du groupe et/ou le groupe, et des données sur le groupe ;

Le terminal est par exemple constitué d'un système informatique intégrant des applications mobiles à partir d'un dispositif grand public ou d'une tablette, fonctionnant avec un système de communication public ou privé.

Dans certains modes de réalisation, l'application du terminal comprend en outre un module d'entrée manuelle de données ou d'évènement, par exemple d'évènement non planifié, par l'utilisateur du terminal, le terminal de communication étant de préférence configuré pour envoyer lesdites données ou évènement au dispositif de gestion d'itinéraires.

Dans certains modes de réalisation, le terminal comprend en outre un module de calcul de position dudit terminal, configuré pour calculer en temps réel la position d'un utilisateur du dispositif par l'intermédiaire de son terminal et, par exemple, le situer sur son trajet, voire, orienter une carte par rapport à la position, l'orientation et/ou le déplacement de l'utilisateur.

Dans certains modes de réalisation, le module de calcul de position dudit terminal est configuré pour envoyer ladite position du terminal au dispositif de gestion d'itinéraires, par l'envoi de données par l'intermédiaire du module de communication du terminal.

Dans certains modes de réalisation, le module d'affichage graphique fournit l'itinéraire sous la forme d'un ordre graphique, ou d'une carte, comportant des points colorés ou symboles, par exemple reliés entre eux, qui indiquent sur le graphique ou la carte des lieux en particulier ou des événements.

Dans certains modes de réalisation, le module d'affichage graphique est configuré pour afficher différents types d'informations et d'ordres de mission.

Dans certains modes de réalisation, chaque module de communication comprend un module de chiffrement configuré pour chiffrer les données à envoyer par l'intermédiaire du module de communication et pour déchiffrer des données chiffrées reçues par le module de communication.

Dans certains modes de réalisation, le système comprenant en outre un serveur de communication sécurisé configuré pour être une passerelle relais entre le dispositif de gestion d'itinéraires, et une pluralité de terminaux de communication, le serveur comportant un module de communication, configuré pour envoyer des données de l'itinéraire calculé à une pluralité de modules de communication d'une pluralité de terminaux, et un module de chiffrement et déchiffrement configuré pour chiffrer les données à envoyer au dispositif et au terminal et pour déchiffrer des données chiffrées reçues du dispositif et du terminal.

Dans certains modes de réalisation, le module de calcul utilise une base de données géographique vectorielle (lignes, polygones...), par opposition aux cartes « raster » (des images peu exploitables par des algorithmes).

Dans certains modes de réalisation, le dispositif comprend des bases de données géoréférencées telles que celles comprenant des cartes « Open Street Map », et celles comprenant des reliefs : base de données SRTM (Shuttle Radar Topography Mission).

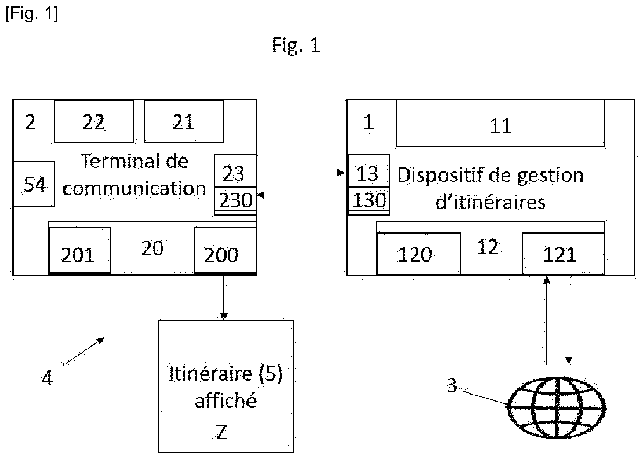

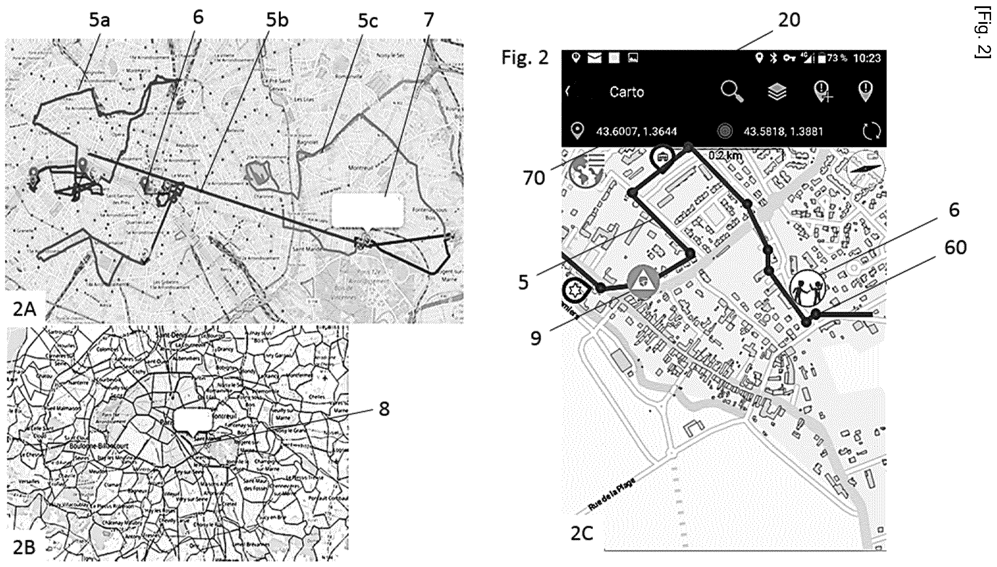

Dans des modes de réalisation, le système de gestion d'itinéraires (4), par exemple illustré de manière non limitative et à titre d'exemple à la figure 1, comprend un dispositif de gestion d'itinéraires (1) en communication avec un terminal de communication (2). Le dispositif (1) comprend une base de données comprenant dans une base de données (11) une pluralité d'informations à prendre en compte pour créer un itinéraire optimisé pour une personne ou un groupe de personne, par exemple des soldats d'une patrouille. Le dispositif (1) comprend aussi un module de calcul (12) comprenant au moins un algorithme d'intelligence artificiel (120) configuré pour calculer l'itinéraire optimal, selon des critères de décision paramétrables et mémorisés, à partir de données conservées dans une base de données. Le module de calcul (12) peut aussi comprendre un sous-module de détection d'évènements (121) configuré pour pouvoir accéder, par le réseau internet (3) aux différents réseaux, notamment sociaux, ou autres sources d'informations publiques ou privées pour détecter des événements planifiés et non planifiés, et collecter des données des évènements détectés. Il peut ensuite enregistrer lesdites données collectées dans la base de données (11) du dispositif (1) pour améliorer la gestion et l'optimisation des itinéraires par le module de calcul (12) qui dispose alors de plus de données. Le dispositif (1) envoie le résultat des calculs du module de calcul (12), correspondant à au moins un itinéraire créé (5, fig. 2), au terminal de communication (2) par l'intermédiaire de leurs modules de communication respectifs (13, 23). Les dispositif (1) et terminal (2) peuvent comprendre chacun un sous-module de chiffrement et déchiffrement (130, 230) pour chiffrer et déchiffrer la communication et ainsi permettre d'améliorer la sécurité et la confidentialité des échanges de données. Le terminal de communication (2) enregistre les données reçues dans sa base de données (21). Une application (20) comprenant un module d'affichage graphique (200) permet d'afficher les données reçues, par exemple sous forme d'itinéraire (5) ou d'ordre graphique (Z) sur un écran (non représenté). Un module de calcul de position du terminal (22) permet au terminal (2) de calculer, d'afficher sur un écran et d'envoyer les données de sa position au dispositif (1). En outre, un module d'entrée manuelle de données permet à un utilisateur d'entrer des données dans l'application (20), les données pouvant par exemple être envoyées au dispositif de gestion (1) pour mise à jour de sa base de données (11) par exemple sur un évènement non planifié, et recalcul d'un itinéraire par le module de calcul (12) du dispositif (1).

Plus particulièrement, la figure 2 illustre des exemples d'affichages d'itinéraires (5) selon des modes de réalisation non limitatifs de la présente invention (Figures 2A, 2B et 2C). Dans la figure 2A, le module d'affichage graphique (200) de l'application (20) affiche plusieurs itinéraires (5a, 5b, 5c) calculés par le module de calcul (12) du dispositif de gestion (1). Des points d'intérêts (6) sont visibles et des informations associées à un point d'intérêt (7) est affiché à la demande d'un utilisateur. Dans la figure 2B, la carte est découpée en zone à surveiller (8), le module d'affichage graphique (200) pouvant afficher les informations liées à une zone (8). Les informations affichées dans la figure 2A et 2B peuvent être des informations géoréférencées (70) et/ou non géoréférencées. La figure 2C est un autre type d'affichage réalisé par le module d'affichage graphique (200) de l'application (20) sur un écran d'un terminal de communication (2), qui comprend la position du terminal (9) calculée par le module de calcul de position du terminal (22), un itinéraire (5) des informations géoréférencées (70) un point d'intérêt (6) et des points de passage (60).

Les informations sur des évènements et sur les personnes réalisant les itinéraires sont stockées dans une base de données du dispositif, puis analysées par ledit algorithme d'intelligence artificielle du module de calcul pour calculer un itinéraire. Les informations sont géo référencées pour la plupart, par exemple des évènements référencés par leur latitude et longitude, tels qu'une manifestation, une agression ou un autre point d'intérêt. Des informations cartographiques peuvent aussi être géoréférencées telles que des routes ou un pont.

A l'inverse, certaines informations peuvent ne pas être géoréférencés telles que l'âge du patrouilleur, ou son nombre de patrouilles effectuées. Dans certains modes de réalisation, l'itinéraire calculé est envoyé sous forme d'une suite de point géoréférencés. Le SIG, Système d'informations géographiques (données de latitude et longitude) peut être utilisé dans le dispositif.

Dans certains modes de réalisation, au moins un serveur est dédié à la recherche et à la détection d'événements planifiés, par exemple une fête nationale, et non planifiés, par exemple une réunion syndicale, une agression, une grève ou un rassemblement. Les informations publiées sur internet, les informations des préfectures ou des services publics concernant les autorisations de réunions de personnes, les alertes météo, de la police ou des pompiers, sont récupérées par ledit serveur et analysées pour détecter des évènements dans le but de calculer un itinéraire qui passe par ces événements ou s'en approche, ce paramètre étant de préférence défini par l'homme de métier (comme l'utilisateur ou l'opérateur qui configure le système). Dans certains modes de réalisation, Il est aussi possible de modifier l'itinéraire en temps réel, y compris lorsque la patrouille est déjà en train de suivre ledit itinéraire, à partir du moment où l'on connait les coordonnées géographiques de la patrouille, de préférence grâce à un terminal de communication porté par au moins un des membres de ladite patrouille. Le trajet peut être modifiée, ou la patrouille peut être informée de l'événement proche pour qu'elle intervienne (demande d'intervention) sans modification de l'itinéraire. Dans certains modes de réalisation, la demande d'intervention se fait par l'intermédiaire du terminal de communication.

La base de données comprend des exemples d'évènements types auxquels est associée une distance maximale de la localisation de l'événement par rapport à au moins un itinéraire calculé par le module de calcul. Dans le cas où le module de calcul détecte un évènement dont la distance par rapport à chaque itinéraire calculé est supérieure à un seuil, le module peut modifier l'itinéraire d'une patrouille pour réduire la distance de trajet sous ce seuil.

Dans certains modes de réalisation, le module de calcul peut estimer la criticité d'un évènement, de préférence de manière automatisée, par exemple sur un critère du nombre de personnes concernés par l'événement, afin de pondérer l'importance de chaque évènement et en prioriser certains. Avantageusement, cela permet, lorsque plusieurs événements proches et représentant chacun des dangers sont détectés, de modifier l'itinéraire afin d'incorporer au moins certains de ces évènements à l'itinéraire et donc prioriser la patrouille de certains de ces évènements, considérés comme critiques.

Dans certains modes de réalisation, la base de données comprend des données concernant chaque personne, par exemple chaque soldat, notamment la distance parcourue, le nombre de patrouilles effectuées, l'âge, le type de régiment, le grade, les équipements et/ou véhicules, ou tout autre information qui peut avoir une influence sur le calcul de l'itinéraire. Cela permet avantageusement d'équilibrer les efforts de chaque personne ou groupe de personnes, et d'optimiser les patrouilles en fonction du profil de chaque personne.

Dans certains modes de réalisation, le nombre de patrouilles effectuées par chaque personne est conservé dans la base de données, le module de calcul pouvant utiliser cette donnée comme facteur de décision pour le choix des participants à un itinéraire. De même, il est possible de paramétrer le module de calcul pour qu'une même personne ne réalise pas un itinéraire dans une zone donnée un nombre de fois trop important. Par exemple le module de calcul peut prendre en compte le nombre d'interventions effectués par une personne ou une patrouille sur une zone donnée, peut comparer ce nombre à un seuil prédéterminé et affecter une autre patrouille sur ladite zone si le seuil (par exemple un quota d'intervention) est dépassé.

Dans certains modes de réalisation, le module de calcul réalise des études statistiques sur chaque zone de couverture, les études statistiques portant en autres sur le nombre d'itinéraires de couverture réalisés sur une zone donnée, combien de points géographiques et quand. Le module de calcul réalise ensuite une comparaison de chaque zone par rapport à d'autres zones pour pondérer les résultats desdites études. Associés à d'autres facteurs décrits dans la demande, cela permet au module de calcul de calculer un itinéraire à effectuer, et préférentiellement à calculer et suggérer des personnes pour réaliser ledit itinéraire, parmi les personnes disponibles pour patrouiller. Ainsi, si plusieurs itinéraires ont été réalisés dans une même zone, le module de calcul peut affecter une patrouille à une autre zone et/ou à un autre trajet, notamment en temps réel, afin d'équilibrer la couverture des zones d'une région.

Dans certains modes de réalisation, le module de calcul produit des cartes de couvertures, comme par exemple illustré de manière non-limitative sur la figure 2B, à partir de listes d'événements planifiés et/ou non planifiés, les événements étant géoréférencés, de manière manuelle ou automatique. Chaque événement peut être pondéré, notamment en fonction de sa criticité, et chaque facteur disponible est pondéré et utilisé pour réaliser le calcul de l'itinéraire.

Dans certains modes de réalisation, des évènements non planifiés sont recherchés sur différentes sources, telles que des chaines et sites d'informations, par exemple par « text mining » ou recherche automatisée dans le texte, sont géo référencées, et pondérés, par exemple en fonction de leur criticité. Il est en outre possible de pondérer une zone particulière, par exemple pour insister sur son caractère critique, important ou au contraire bénin.

Les optimisations de trajet peuvent être réalisées par différents algorithmes d'optimisation : algorithme du voyageur de commerce, qui est réputé et simple, ou d'autres plus statistiques et plus complexe, par exemple comme celui de Djikstra.

Des préférences « métier » peuvent être ajoutées pour influencer le trajet, en fonction de la patrouille par exemple. Ainsi, en présence d'un régiment de soldats alpins, et d'un régiment de marines, il est préférable que le régiment alpin réalise l'itinéraire comprenant des collines ou des montagnes et où il faudra grimper. De la même façon, un régiment du train est utile pour couvrir de très grandes zones, en fonction du moyen de transport par exemple en train ou en véhicule. Des informations sur les équipements des groupes de soldats peuvent aussi influencer le calcul de l'itinéraire et le choix des soldats. Par exemple, un groupe équipé de véhicules amphibies sera privilégié pour patrouiller dans une zone marécageuse. Chaque préférence métier représente ainsi un facteur à pondérer en fonction des situations pour décider quel itinéraire pour quel groupe de personnes.

Dans certains modes de réalisation, il est possible d'ajouter manuellement ou automatiquement des « waypoints », ou points de contrôle ou de passage, par lesquels la patrouille doit passer, par exemple des points d'intérêt (POI), des événements, considérés sensibles... Certains de ces points peuvent être basiques et fixes, par exemple lié à la topographie de la zone, comme un goulet d'étranglement, tel qu'un pont à traverser. D'autres ne sont pas des évènements mais des passages obligés comme églises, mosquées, commissariat aux réfugiés. Les points de passages peuvent par exemple être des points cartographiques, contextuels, ou représentant des sites sensibles.

Les zones à risque sont déterminées en fonction du nombre de sites sensibles et d'événements planifiés ou non planifiés dans la zone, à la fois les évènements actuels et passés. Les évènements passés sont ainsi conservés dans un historique dans une base de données, et lesdits évènement pouvant être associés à un degré de criticité qui peut être pris comme facteur de pondération lors du calcul de l'itinéraire à réaliser.

Dans certains modes de réalisation, la pertinence des patrouilleurs est une information permettant d'influencer le choix du personnel pour un itinéraire donné. Les patrouilleurs peuvent générer des évènements non planifiés sur leur terminal de communication. Certains en génèrent plus que d'autres. Dans certains modes de réalisation, on va considérer qu'un bon patrouilleur génère un grand nombre d'événements non planifiés (en fonction de la criticité de la zone à patrouiller). Dans d'autres modes de réalisation, il est possible de calculer un score de pertinence à cette création d'évènement en fonction de plusieurs facteurs comme par exemple le nombre d'évènements créés, de leurs études, de la criticité de la zone à patrouiller. Les patrouilleurs ayant un score élevé pourront par exemple être affectés à une zone à haute criticité.

Le dispositif, et le système de gestion d'itinéraire traite un grand nombre de données afin de réaliser, de préférence en temps réel, le calcul d'itinéraires pour différents groupes de personnes. Ce traitement de données peut être par exemple réalisé par étapes, chaque lot de données étant traité par un algorithme.

On comprendra aisément à la lecture de la présente demande que les particularités de la présente invention, comme généralement décrits et illustrés dans les figures, puissent être arrangés et conçus selon une grande variété de configurations différentes. Ainsi, la description de la présente invention et les figures afférentes ne sont pas prévues pour limiter la portée de l'invention mais représentent simplement des modes de réalisation choisis.

### LISTE DES SIGNES DE REFERENCE

1. Dispositif de gestion d'itinéraires
11. base de données
12. module de calcul
120. Algorithme(s) d'intelligence artificielle
121. sous-module de détection d'évènements
13. module de communication
130. sous-module de chiffrement et déchiffrement
2. Terminal de communication
20. application
200. module d'affichage graphique
201. module d'entrée manuelle de données
21. base de données
22. module de calcul de position du terminal
23. module de communication
230. sous-module de déchiffrement
3. Réseau Internet
4. Système de gestion d'itinéraires
5, 5a, 5b, 5c. Itinéraires
6. Point d'intérêt
60. Points de passage
7. Informations associées à un point d'intérêt
70. Informations géoréférencées
8. Zone à surveiller
9 Position du terminal
Z. Itinéraire affiché

## Revendications

1. Dispositif de gestion d'itinéraires (1) d'un groupe de personnes, comprenant des modules de programme exécutables sur un ou plusieurs composants hardware de traitement tels qu'un microprocesseur, le dispositif comprenant
- Un module de communication (13, 23) de données en temps réel, apte à émettre et recevoir des données d'au moins un autre module de communication, les données comprenant des informations concernant des évènements planifiés ou non planifiés,
- une base de données (11) comprenant des données géographiques vectorielles et/ou géoréférencées, et des données non géoréférencées,
- un module de calcul (12) d'un itinéraire à effectuer, le module de calcul calculant ledit itinéraire en fonction des informations transmises par le module de réception, le module de calcul d'un itinéraire implémentant au moins un algorithme d'intelligence artificielle (120) configuré pour calculer l'itinéraire optimal, selon des critères de décision paramétrables et mémorisés, à partir de données conservées dans la base de données (11), ledit algorithme d'intelligence artificielle se basant sur des données classées, de la base de données, comprenant des données publiques et privées enregistrées comprenant des itinéraires, des évènements, et des situations passés, et/ou des données météos, actualités présentes et passées,
dans lequel les critères de décision paramétrables prennent en compte, pour le calcul ou la modification de l'itinéraire, des contraintes comprenant des informations provenant de la base de données (11) ou d'une autre base de données du dispositif concernant le personnel, comprenant au moins un paramètre représentatif d'un état de chaque membre du personnel constituant le groupe, qui considère si le membre est fatigué,
et dans lequel ladite base de données comprend des événements types, auxquels est associée une distance maximale entre la localisation dudit événement et ledit itinéraire, et ledit module de calcul est prévu pour détecter un événement type dont la distance maximale audit itinéraire est supérieure à une distance seuil et pour modifier ledit itinéraire afin de réduire ladite distance maximale à une valeur sous ladite distance seuil.

2. Dispositif selon la revendication précédente, dans lequel la base de données comprend des données comprenant la topographie environnant au moins un terminal utilisé par un membre du groupe et/ou le groupe, ou encore des informations sur le groupe.

3. Dispositif l'une quelconque des revendications précédentes, dans lequel le module de calcul comprend un sous-module de détection d'évènements (121) configuré pour pouvoir accéder, par le réseau internet (3), aux différents réseaux, notamment sociaux, ou autres sources d'informations publiques ou privées pour détecter des événements planifiés et non planifiés, collecter des données des évènements détectés, et les enregistrer dans la base de données du dispositif, par exemple par extraction et analyse de données publiques ou privées provenant des réseaux sociaux, ou des messages.

4. Dispositif selon l'une quelconque des revendications précédentes, ledit module de calcul est configuré pour classifier automatiquement lesdits évènements détectés selon des critères définis en rapport avec une mission du groupe de personnes.

5. Dispositif selon l'une quelconque des revendications précédentes, dans lequel les critères de décision paramétrables permettent d'ajouter des contraintes pour le calcul de l'itinéraire, des préférences, des points de passage ou de contrôles, ou ordres complémentaires provenant d'un niveau hiérarchique par exemple des interdictions.

6. Dispositif selon l'une quelconque des revendications précédentes, dans lequel les données reçues et émises par le dispositif sont chiffrées, le dispositif comprenant en outre un module de chiffrement et déchiffrement configuré pour déchiffrer les données reçues et pour chiffrer les données émises.

7. Dispositif selon l'une quelconque des revendications précédentes, dans lequel le module de calcul fournit l'itinéraire sous la forme d'un ordre graphique ou d'une carte, comportant des points colorés ou symboles, par exemple reliés entre eux, qui indiquent sur le graphique ou la carte des lieux en particulier ou des événements.

8. Dispositif selon l'une quelconque des revendications précédentes, dans lequel le module de calcul est configuré pour envoyer et commander l'affichage de différents types d'informations et d'ordres de mission.

9. Dispositif selon l'une quelconque des revendications précédentes, dans lequel les données utilisées par le module de calcul sont extraites de bases de données privées les contenant, et choisies parmi, des données privées comprenant le passage de patrouilles par le passé pour déterminer la durée de la patrouille en fonction du périmètre à couvrir, les événements passés relevés et enregistrés dans le système de communication, les sites sensibles mémorisés et situés dans le périmètre de la patrouille, la pertinence des patrouilleurs en fonction des données de la base de données du personnel, le nombre de kilomètres déjà parcourus par le personnel du groupe fourni par le terminal d'au moins un membre du groupe, la topographie du terrain fournie par des bases de données géographiques vectorielles, et des données publiques comprenant la météo ou l'actualité des événements planifiés ou imprévus, ces données étant récupérées par une interface reliée au réseau internet, ou des bases de données spécifiques.

10. Dispositif selon l'une quelconque des revendications précédentes, dans lequel le sous-module de détection est configuré pour réaliser des analyses textuelles et/ou contextuelles pour détecter des événements planifiés et/ou non planifiés.

11. Système de gestion d'itinéraire comprenant le dispositif de gestion d'itinéraires d'un groupe de personnes selon l'une quelconque des revendications précédentes, le système comprenant en outre un terminal de communication, mobile et porté par au moins un utilisateur faisant partie dudit groupe de personnes, le terminal de communication comprenant :
- un module de communication de données en temps réel, apte à émettre et recevoir des données d'au moins un autre module de communication, les données comprenant des informations concernant des évènements planifiés ou non planifiés
- une application d'interface Homme Machine (IHM) comprenant un module d'affichage graphique de l'itinéraire calculé par le module de calcul, configuré pour afficher sur ledit terminal de communication ledit itinéraire et/ou des informations reçues du dispositif,
- Au moins une base de données comprenant des données géographiques vectorielles et/ou géoréférencées, et des données non géoréférencées, les données comprenant, des informations concernant des évènements, la topographie environnant au moins un terminal utilisé par un membre du groupe et/ou le groupe, et des données sur le groupe.

12. Système selon la revendication précédente, dans lequel l'application du terminal comprend en outre un module d'entrée manuelle de données ou d'évènement, par exemple d'évènement non planifié, par l'utilisateur du terminal, le terminal de communication étant de préférence configuré pour envoyer lesdites données ou évènement au dispositif de gestion d'itinéraires.

13. Système selon l'une quelconque des revendications précédentes 11 à 12, dans lequel le terminal comprend en outre un module de calcul de position dudit terminal, configuré pour calculer en temps réel la position d'un utilisateur du dispositif par l'intermédiaire de son terminal et, le situer sur son trajet, voire, orienter une carte par rapport à la position, l'orientation et/ou le déplacement de l'utilisateur.

14. Système selon la revendication précédente, dans lequel le module de calcul de position dudit terminal est configuré pour envoyer ladite position du terminal au dispositif de gestion d'itinéraires, par l'envoi de données par l'intermédiaire du module de communication du terminal.

15. Système selon l'une quelconque des revendications précédentes 11 à 14, dans lequel le module d'affichage graphique fournit l'itinéraire sous la forme d'un ordre graphique ou d'une carte, comportant des points colorés ou symboles, par exemple reliés entre eux, qui indiquent sur le graphique ou la carte des lieux en particulier ou des événements.

16. Système selon l'une quelconque des revendications précédentes 11 à 15, dans lequel le module d'affichage graphique est configuré pour afficher différents types d'informations et d'ordres de mission.

17. Système selon l'une quelconque des revendications précédentes 11 à 16, chaque module de communication comprend un module de chiffrement configuré pour chiffrer les données à envoyer par l'intermédiaire du module de communication et pour déchiffrer des données chiffrées reçues par le module de communication.

18. Système selon l'une quelconque des revendications précédentes 11 à 17, le système comprenant en outre un serveur de communication sécurisé configuré pour être une passerelle relais entre le dispositif de gestion d'itinéraires, et une pluralité de terminaux de communication, le serveur comportant un module de communication, configuré pour envoyer des données de l'itinéraire calculé à une pluralité de modules de communication d'une pluralité de terminaux, et un module de chiffrement et déchiffrement configuré pour chiffrer les données à envoyer au dispositif et au terminal et pour déchiffrer des données chiffrées reçues du dispositif et du terminal.

## Patentansprüche

1. Vorrichtung zum Verwalten von Routen (1) einer Personengruppe, umfassend Programmmodule, die auf einer oder mehreren Hardware-Verarbeitungskomponenten, wie etwa einem Mikroprozessor, ausführbar sind, die Vorrichtung umfassend:
- ein Kommunikationsmodul (13, 23) für Echtzeitdaten, das geeignet ist, Daten von mindestens einem anderen Kommunikationsmodul zu senden und zu empfangen, die Daten umfassend Informationen bezüglich geplanter oder ungeplanter Ereignisse,
- eine Datenbank (11), umfassend vektorielle und/oder georeferenzierte geografische Daten und nicht georeferenzierte Daten,
- ein Berechnungsmodul (12) für eine zurückzulegende Route, wobei das Berechnungsmodul die Route in Abhängigkeit von den durch das Empfangsmodul übertragenen Informationen berechnet, wobei das Berechnungsmodul für eine Route mindestens einen Algorithmus der künstlichen Intelligenz (120) implementiert, der zum Berechnen der optimalen Route gemäß parametrierbaren und gespeicherten Entscheidungskriterien anhand von in der Datenbank (11) aufbewahrten Daten konfiguriert ist, wobei der Algorithmus der künstlichen Intelligenz auf klassifizierten Daten der Datenbank basiert, umfassend aufgezeichnete öffentliche und private Daten, umfassend vergangene Routen, Ereignisse und Situationen, und/oder Wetterdaten, gegenwärtige und vergangene Nachrichten,
wobei die parametrierbaren Entscheidungskriterien für die Berechnung oder die Änderung der Route Beschränkungen mit einbeziehen, umfassend Informationen, die aus der Datenbank (11) oder einer anderen Datenbank der Vorrichtung bezüglich des Personals stammen, umfassend mindestens einen Parameter, der einen Zustand jedes die Gruppe ausbildenden Personalmitglieds darstellt, der berücksichtigt, ob das Mitglied müde ist, und wobei die Datenbank typische Ereignisse umfasst, denen eine maximale Entfernung zwischen dem Ort des Ereignisses und der Route zugeordnet ist, und das Berechnungsmodul zum Erkennen eines typischen Ereignisses, dessen maximale Entfernung zu der Route größer als eine Schwellenentfernung ist, und zum Ändern der Route vorgesehen ist, um die maximale Entfernung auf einen Wert unter der Schwellenentfernung zu verringern.

2. Vorrichtung nach dem vorstehenden Anspruch, wobei die Datenbank Daten umfasst, umfassend die Topographie, die mindestens ein Endgerät umgibt, das durch ein Mitglied der Gruppe und/oder die Gruppe verwendet wird, oder auch Informationen über die Gruppe.

3. Vorrichtung nach einem der vorstehenden Ansprüche, wobei das Berechnungsmodul ein Ereigniserkennungsuntermodul (121) umfasst, das konfiguriert ist, um durch das Internetnetzwerk (3) auf die verschiedenen Netzwerke, insbesondere soziale, oder andere öffentliche oder private Informationsquellen zum Erkennen geplanter und ungeplanter Ereignisse zugreifen zu können, Daten der erkannten Ereignisse zu sammeln und sie in der Datenbank der Vorrichtung aufzuzeichnen, beispielsweise durch Extraktion und Analyse von öffentlichen oder privaten Daten, die aus sozialen Netzwerken oder Nachrichten stammen.

4. Vorrichtung nach einem der vorstehenden Ansprüche, wobei das Berechnungsmodul zum Klassifizieren der detektierten Ereignisse gemäß definierten Kriterien in Bezug auf einen Einsatz der Personengruppe automatisch konfiguriert ist.

5. Vorrichtung nach einem der vorstehenden Ansprüche, wobei die parametrierbaren Entscheidungskriterien es ermöglichen, Beschränkungen für die Routenberechnung, Präferenzen, Weg- oder Kontrollpunkte oder zusätzliche Befehle, die von einer hierarchischen Ebene stammen, beispielsweise Verbote, hinzuzufügen.

6. Vorrichtung nach einem der vorstehenden Ansprüche, wobei die durch die Vorrichtung empfangenen und gesendeten Daten verschlüsselt sind, die Vorrichtung ferner umfassend ein Verschlüsselungs- und Entschlüsselungsmodul, das zum Entschlüsseln der empfangenen Daten und Verschlüsseln der gesendeten Daten konfiguriert ist.

7. Vorrichtung nach einem der vorstehenden Ansprüche, wobei das Berechnungsmodul die Route in Form einer grafischen Reihenfolge oder einer Karte bereitstellt, die farbige Punkte oder Symbole aufweist, die beispielsweise miteinander verbunden sind und die auf der Grafik oder der Karte gewisse Orte oder Ereignisse angeben.

8. Vorrichtung nach einem der vorstehenden Ansprüche, wobei das Berechnungsmodul zum Übermitteln und Steuern der Anzeige von verschiedenen Arten von Informationen und Einsatzbefehlen konfiguriert ist.

9. Vorrichtung nach einem der vorstehenden Ansprüche, wobei die durch das Berechnungsmodul verwendeten Daten aus diese enthaltenden privaten Datenbanken extrahiert werden und aus privaten Daten ausgewählt sind, umfassend den Durchgang von Patrouillen in der Vergangenheit zum Bestimmen der Dauer der Patrouille in Abhängigkeit von dem abzudeckenden Bereich, vergangenen Ereignissen, die erfasst und in dem Kommunikationssystem aufgezeichnet werden, sensiblen Standorten, die abgespeichert sind und sich in dem Bereich der Patrouille befinden, der Eignung der Patrouillierenden in Abhängigkeit von den Daten der Personaldatenbank, der Anzahl der bereits von dem Personal der Gruppe zurückgelegten Kilometer, die durch das Endgerät mindestens eines Mitglieds der Gruppe bereitgestellt wird, der Topographie des Geländes, die durch vektorielle geographische Datenbanken bereitgestellt wird, und öffentlichen Daten, umfassend das Wetter oder aktuelle Informationen zu geplanten oder unvorhergesehenen Ereignissen, wobei diese Daten über eine mit dem Internet verbundene Schnittstelle oder spezifische Datenbanken abgerufen werden.

10. Vorrichtung nach einem der vorstehenden Ansprüche, wobei das Erkennungsuntermodul zum Durchführen textueller und/oder kontextueller Analysen zum Erkennen geplanter und/oder ungeplanter Ereignisse konfiguriert ist.

11. Routenverwaltungssystem, umfassend die Vorrichtung für die Routenverwaltung einer Gruppe von Personen nach einem der vorstehenden Ansprüche, das System ferner umfassend ein Kommunikationsendgerät, das mobil ist und durch mindestens einen Benutzer getragen wird, der zu der Gruppe von Personen gehört, das Kommunikationsendgerät umfassend:
- ein Echtzeitdatenkommunikationsmodul, das geeignet ist, Daten von mindestens einem anderen Kommunikationsmodul zu senden und zu empfangen, die Daten umfassend Informationen bezüglich geplanter oder ungeplanter Ereignisse
- eine Mensch-Maschine-Schnittstellenanwendung (HMI), umfassend ein grafisches Anzeigemodul der durch das Berechnungsmodul berechneten Route, das zum Anzeigen auf dem Kommunikationsendgerät der Route und/oder der durch die Vorrichtung empfangenen Informationen konfiguriert ist,
- mindestens eine Datenbank, umfassend vektorielle und/oder georeferenzierte geografische Daten und nicht georeferenzierte Daten, die Daten umfassend Informationen bezüglich Ereignissen, der Topografie, die mindestens ein Endgerät umgibt, das durch ein Mitglied der Gruppe und/oder die Gruppe verwendet wird, und Daten über die Gruppe.

12. System nach dem vorstehenden Anspruch, wobei die Anwendung des Endgeräts ferner ein Modul für eine manuelle Eingabe von Daten oder eines Ereignisses, beispielsweise eines ungeplanten Ereignisses, durch den Benutzer des Endgeräts umfasst, wobei das Kommunikationsendgerät vorzugsweise zum Übermitteln der Daten oder des Ereignisses an die Vorrichtung für die Routenverwaltung konfiguriert ist.

13. System nach einem der vorstehenden Ansprüche 11 bis 12, wobei das Endgerät ferner ein Positionsberechnungsmodul des Endgeräts umfasst, das zum Berechnen in Echtzeit der Position eines Benutzers der Vorrichtung mittels seines Endgeräts und Lokalisieren von ihm auf seiner Route oder sogar Ausrichten einer Karte in Bezug auf die Position, die Ausrichtung und/oder die Bewegung des Benutzers konfiguriert ist.

14. System nach dem vorstehenden Anspruch, wobei das Positionsberechnungsmodul des Endgeräts zum Übermitteln der Position des Endgeräts an die Vorrichtung für die Routenverwaltung durch das Übermitteln von Daten über das Kommunikationsmodul des Endgeräts konfiguriert ist.

15. System nach einem der vorstehenden Ansprüche 11 bis 14, wobei das grafische Anzeigemodul die Route in Form einer grafischen Reihenfolge oder einer Karte bereitstellt, die farbige Punkte oder Symbole aufweist, die beispielsweise miteinander verbunden sind und die auf der Grafik oder der Karte gewisse Orte oder Ereignisse angeben.

16. System nach einem der vorstehenden Ansprüche 11 bis 15, wobei das grafische Anzeigemodul zum Anzeigen von verschiedenen Arten von Informationen und Einsatzbefehlen konfiguriert ist.

17. System nach einem der vorstehenden Ansprüche 11 bis 16, wobei jedes Kommunikationsmodul ein Verschlüsselungsmodul umfasst, das zum Verschlüsseln der über das Kommunikationsmodul zu sendenden Daten und zum Entschlüsseln der durch das Kommunikationsmodul empfangenen verschlüsselten Daten konfiguriert ist.

18. System nach einem der vorstehenden Ansprüche 11 bis 17, das System ferner umfassend einen sicheren Kommunikationsserver, der konfiguriert ist, um ein Relais-Gateway zwischen der Routenverwaltungsvorrichtung und einer Vielzahl von Kommunikationsendgeräten zu sein, wobei der Server ein Kommunikationsmodul, das zum Übermitteln der Daten der berechneten Route an eine Vielzahl von Kommunikationsmodulen einer Vielzahl von Endgeräten konfiguriert ist, und ein Verschlüsselungs- und Entschlüsselungsmodul aufweist, das zum Verschlüsseln und Entschlüsseln der an die Vorrichtung und an das Endgerät zu sendenden Daten und von der Vorrichtung und dem Endgerät empfangenen verschlüsselten Daten konfiguriert ist.

## Claims

1. A device (1) for managing itineraries for a group of people, comprising program modules executable on one or more processing hardware components such as a microprocessor, the device comprising:
- a module (13, 23) for communicating data in real time, which module is able to send and receive data from at least one other communication module, the data comprising information relating to planned or unplanned events,
- a database (11) comprising vectorial geographical data and/or georeferenced data, and non-georeferenced data,
- a module (12) for calculating an itinerary to be carried out, the calculation module calculating said itinerary based on information transmitted by the reception module, the module for calculating an itinerary implementing at least one artificial intelligence algorithm (120) configured to calculate the optimal itinerary, according to configurable decision criteria stored in memory, based on data stored in the database (11), said artificial intelligence algorithm being based on classified data, from the database, comprising stored public and private data comprising itineraries, events, and past situations, and/or present and past weather or news data,
wherein the configurable decision criteria take into account, for the calculation or modification of the itinerary, constraints comprising information originating from the database (11) or from another database of the device concerning the personnel, comprising at least one parameter representative of a state of each member of the personnel constituting the group, which parameter considers whether the member is tired, and wherein said database comprises typical events, with which a maximum distance between the location of said event and said itinerary is associated, and said calculation module is designed to detect a typical event for which the maximum distance to said itinerary is greater than a threshold distance and to modify said itinerary in order to reduce said maximum distance to a value below said threshold distance.

2. The device according to the preceding claim, wherein the database comprises data comprising the topography surrounding at least one terminal used by a member of the group and/or the group, or even information relating to the group.

3. The device according to either one of the preceding claims, wherein the calculation module comprises an event detection sub-module (121) configured to be able to access, via the Internet (3), different networks, in particular social networks, or other sources of public or private information, in order to detect planned and unplanned events, to collect data of the detected events, and to store them in the database of the device, for example by extraction and analysis of public or private data originating from social networks or messages.

4. The device according to any one of the preceding claims, said calculation module is configured to automatically classify said detected events according to criteria defined in relation to a mission of the group of people.

5. The device according to any one of the preceding claims, wherein the configurable decision criteria make it possible to add constraints for calculating the itinerary, preferences, crossing or control points, or additional orders originating from a hierarchical level, for example prohibitions.

6. The device according to any one of the preceding claims, wherein the data received and sent by the device are encrypted, the device further comprising an encryption and decryption module configured to decrypt the data received and to encrypt the data sent.

7. The device according to any one of the preceding claims, wherein the calculation module provides the itinerary in the form of a graphical order or a map, comprising colored dots or symbols, for example connected to one another, which indicate on the graphic or the map particular places or events.

8. The device according to any one of the preceding claims, wherein the calculation module is configured to send and order the display of different types of information and mission orders.

9. The device according to any one of the preceding claims, wherein the data used by the calculation module are extracted from private databases containing them, and selected from among private data comprising the past routes of patrols in order to determine the duration of the patrol based on the perimeter to be covered, past events noted and stored in the communication system, the sensitive sites stored in memory and located within the perimeter of the patrol, the relevance of the patrollers based on data from the personnel database, the number of kilometers already covered by the personnel of the group provided by the terminal of at least one member of the group, the topography of the ground provided by vectorial geographical databases, and public data comprising the weather or the current state of planned or unpredicted events, this data being recovered by an interface connected to the Internet, or specific databases.

10. The device according to any one of the preceding claims, wherein the detection sub-module is configured to perform textual and/or contextual analyses to detect planned and/or unplanned events.

11. An itinerary management system comprising the device for managing itineraries for a group of people according to any one of the preceding claims, the system further comprising a mobile communication terminal carried by at least one user who is part of said group of people, the communication terminal comprising:
- a module for communicating data in real time, which module is able to send and receive data from at least one other communication module, the data comprising information relating to planned or unplanned events,
- a human-machine interface (HMI) application comprising a graphic display module for the itinerary calculated by the calculation module, which module is configured to display on said communication terminal said itinerary and/or information received from the device,
- at least one database comprising vectorial geographical data and/or georeferenced data, and non-georeferenced data, the data comprising information relating to events, the topography surrounding at least one terminal used by a member of the group and/or the group, and data relating to the group.

12. The system according to the preceding claim, wherein the application of the terminal further comprises a module for the manual input of data or events, for example of unplanned events, by the user of the terminal, the communication terminal preferably being configured to send said data or events to the itinerary management device.

13. The system according to either one of the preceding claims 11 to 12, wherein the terminal further comprises a module for calculating the position of said terminal, which module is configured to calculate in real time the position of a user of the device via their terminal and to locate them on their route or even orient a map relative to the position, orientation and/or movement of the user.

14. The system according to the preceding claim, wherein the module for calculating the position of said terminal is configured to send said position of the terminal to the itinerary management device, by sending data via the communication module of the terminal.

15. The system according to any one of the preceding claims 11 to 14, wherein the graphic display module provides the itinerary in the form of a graphical order or a map, comprising colored dots or symbols, for example connected to one another, which indicate on the graphic or the map particular places or events.

16. The system according to any one of the preceding claims 11 to 15, wherein the graphic display module is configured to display different types of information and mission orders.

17. The system according to any one of the preceding claims 11 to 16, each communication module comprises an encryption module configured to encrypt data to be sent via the communication module and to decrypt encrypted data received by the communication module.

18. The system according to any one of the preceding claims 11 to 17, the system further comprising a secure communication server configured to be a relay gateway between the itinerary management device and a plurality of communication terminals, the server comprising a communication module configured to send data of the calculated itinerary to a plurality of communication modules of a plurality of terminals, and an encryption and decryption module configured to encrypt data to be sent to the device and to the terminal and to decrypt encrypted data received from the device and from the terminal.
